(19) Europäisches Patentamt European Patent Office Office européen des brevets

(11) **EP 4 537 924 A1**

(12) **EUROPEAN PATENT APPLICATION**
published in accordance with Art. 153(4) EPC

(43) Date of publication:
16.04.2025 Bulletin 2025/16

(51) International Patent Classification (IPC):
*B01D 46/42* (2006.01)     *B23Q 11/10* (2006.01)

(21) Application number: 23871728.4

(52) Cooperative Patent Classification (CPC):
B01D 46/42; B23Q 11/10

(22) Date of filing: 31.08.2023

(86) International application number:
PCT/JP2023/031943

(87) International publication number:
WO 2024/070488 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 JP 2022157496

(71) Applicant: DAIKIN INDUSTRIES, LTD.
Osaka-shi, Osaka 530-0001 (JP)

(72) Inventors:
• MIURA, Shimpei
  Osaka-shi, Osaka 530-0001 (JP)
• YOKOYAMA, Takahiro
  Osaka-shi, Osaka 530-0001 (JP)
• OGAWA, Takuro
  Osaka-shi, Osaka 530-0001 (JP)
• ARAKI, Takeshi
  Osaka-shi, Osaka 530-0001 (JP)

(74) Representative: Hoffmann Eitle
Patent- und Rechtsanwälte PartmbB
Arabellastraße 30
81925 München (DE)

(54) **FLUID CARRYING APPARATUS**

(57) A fluid transfer apparatus (10) includes a control device (50) configured to determine whether or not a structure (40) is in a clogged state, using a physical quantity obtained from a motor (33) and correlated with a pressure loss in a fluid passage (23), At least one of a transfer section (31) or the fluid passage (23) is configured to make a proportion of a disturbance to the physical quantity small.

FIG.8

EP 4 537 924 A1

## Description

TECHNICAL FIELD

The present disclosure relates to a fluid transfer apparatus.

BACKGROUND ART

Patent Document 1 discloses an apparatus that determines whether or not a filter is in a clogged state, using the time during which a fan is at rest.

CITATION LIST

PATENT DOCUMENT

Patent Document 1: Japanese Unexamined Patent Publication No. 2002-102596

SUMMARY OF THE INVENTION

TECHNICAL PROBLEM

In a system such as one disclosed in Patent Document 1 that determines whether or not a structure (e.g., a filter) is in a clogged state, using the physical quantity obtained from a motor, an improvement in the accuracy in determining whether or not the structure is in the clogged state is desired.

It is therefore an object of the present disclosure to provide a fluid transfer apparatus that can improve the accuracy in determining whether or not a structure is in the clogged state.

SOLUTION TO THE PROBLEMS

A first aspect is a fluid transfer apparatus, including: a fluid passage (23); a transfer section (31) including a motor (33) and an impeller (32) driven by the motor (33), the transfer section (31) being configured to transfer a fluid in the fluid passage (23); a structure (40) disposed in the fluid passage (23); and a control device (50) configured to determine whether or not the structure (40) is in a clogged state, using a physical quantity obtained from the motor (33) and correlated with a pressure loss in the fluid passage (23), at least one of the transfer section (31) or the fluid passage (23) being configured to make a proportion of a disturbance to the physical quantity small.

According to the first aspect, since the structure (40) is disposed in the fluid passage (23), the physical quantity correlated with the pressure loss in the fluid passage (23) changes when the structure (40) is clogged. It is therefore possible to determine the clogged state of the structure (40) using this physical quantity. At least one of the transfer section (31) or the fluid passage (23) is configured to make a proportion of a disturbance to the physical quantity obtained from the motor (33) small. It is therefore possible to improve the accuracy in determining whether or not the structure (40) is in the clogged state using the physical quantity.

To "make the proportion of the disturbance to the physical quantity small" herein includes the following meanings 1) and 2).

1) The proportion of the disturbance to the physical quantity is made small by reducing the disturbance.
2) The proportion of the disturbance to the physical quantity is made small by increasing the amount of change in the physical quantity associated with a change in the pressure loss in the fluid passage (23) between the normal state and the clogged state of the structure.

The above item 1) "making the proportion of the disturbance to the physical quantity small by reducing the disturbance" includes the following meanings a) to c).

a) Reducing the influence of the bearing loss of the transfer section (31) on the physical quantity
b) Reducing the influence of the deformation of the impeller (32) associated with the use of the impeller (32) on the physical quantity
c) Reducing the influence of the movement of the fluid from the outside to the inside of the fluid passage (23) on the physical quantity

A second aspect is an embodiment of the first aspect. In the second aspect, the disturbance includes an influence of a bearing loss of the transfer section (31).

An increase of the influence of the bearing loss of the transfer section (31) results in an increase in the disturbance to the physical quantity, which lowers the accuracy in determining whether or not the structure (40) is in the clogged state. Thus, according to the second aspect, the influence of the bearing loss on the physical quantity is reduced.

A third aspect is an embodiment of the second aspect. In the third aspect, a proportion of power of the transfer section (31) to a sum of the power and the bearing loss of the transfer section (31) at a number of revolutions of 25% of a maximum number of revolutions of the transfer section (31) is larger than 90%.

The inventors of this application have found that if the proportion of the power to the sum of the power and the bearing loss of the transfer section (31) is small at the number of revolutions of 25% of the maximum number of revolutions of the transfer section (31), the disturbance to the physical quantity obtained from the motor (33) increases, resulting in lower accuracy in determining whether or not the structure (40) is in the clogged state.

According to the third aspect, the transfer section (31) is configured to make the proportion greater than 90%. It is thus possible to reduce the influence of the bearing loss of the transfer section (31) on the physical quantity, and therefore possible to improve the accuracy in determining whether or not the structure (40) is in the clogged state.

A fourth aspect is an embodiment of the first aspect. **In** the fourth aspect, the disturbance includes an influence of deformation of the impeller (32) associated with use of the transfer section (31).

The deformation of the impeller (32) associated with the use of the transfer section (31) results in an increase in the disturbance to the physical quantity, which lowers the accuracy in determining whether or not the structure (40) is in the clogged state. Thus, according to the fourth aspect, the influence of the deformation of the impeller (32) on the physical quantity is reduced.

A fifth aspect is an embodiment of the fourth aspect. In the fifth aspect, the impeller (32) is made of resin.

The impeller (32) made of resin is easily deformed when the transfer section (31) is used, which lowers the accuracy in determining whether or not the structure (40) is in the clogged state. Thus, according to the fifth aspect, the influence of the deformation of the impeller (32) on the physical quantity is reduced.

A sixth aspect is an embodiment of the fourth or fifth aspect. In the sixth aspect, a time at which a first-time operation of the transfer section (31) starts is referred to as a point in time ta, and a time at which the transfer section (31) has been operated at a maximum operating temperature of the motor (33) or the impeller (32) and a maximum number of revolutions for 600 hours since the point in time ta is referred to as a point in time tb, and the transfer section (31) is configured such that an amount of change in the physical quantity caused by the deformation of the impeller (32) from the point in time ta to the point in time tb is 50% or less of required accuracy. The "required accuracy" as used herein corresponds to a change in the physical quantity corresponding to an estimated error of the pressure loss in a fluid passage (23).

According to the sixth aspect, the amount of change in the physical quantity caused by the deformation of the impeller (32) from the point in time ta to the point in time tb is half or less of the required accuracy. It is thus possible to reduce the chances of lower accuracy of determination for the structure (40) due to the influence of the deformation of the impeller (32) on the physical quantity.

A seventh aspect is an embodiment of the first aspect. In the seventh aspect, the disturbance includes an influence of movement of the fluid from outside to inside of the fluid passage (23).

An increase of the influence of the movement of the fluid from the outside to the inside of the fluid passage (23) results in an increase in the disturbance to the physical quantity, which lowers the accuracy in determining whether or not the structure (40) is in the clogged state. Thus, according to the seventh aspect, the influence of the movement of the fluid from the outside to the inside of the fluid passage (23) is reduced.

An eighth aspect is an embodiment of the seventh aspect. In the eighth aspect, at least one of an inlet opening (21) or a blow-out opening (22) of the fluid passage (23) is open upward or downward.

According to the eighth aspect, since the inlet opening (21) or the blow-out opening (22) is not open laterally, the fluid is less likely to move from the outside to the inside of the fluid passage (23) due to the influence of side winds, for example. It is thus possible to reduce the influence of the movement of the fluid from the outside to the inside of the fluid passage (23) on the physical quantity.

A ninth aspect is an embodiment of the seventh or eighth aspect. In the ninth aspect, at least one of an inlet opening (21) or a blow-out opening (22) of the fluid passage (23) is open toward an indoor space (I).

According to the ninth aspect, since the inlet opening (21) or the blow-out opening (22) is not open toward an outdoor space, the fluid is less likely to move from the outside to the inside of the fluid passage (23) due to the influence of side winds, for example. It is thus possible to reduce the influence of the movement of the fluid from the outside to the inside of the fluid passage (23) on the physical quantity.

A tenth aspect is an embodiment of any one of the first to ninth aspects. In the tenth aspect, the physical quantity is a degree of deceleration of the transfer section (31) when the transfer section (31) is coming to a stop.

According to the tenth aspect, the control device (50) determines whether or not the structure (40) is in the clogged state, using the degree of deceleration of the transfer section (31).

An eleventh aspect is an embodiment of the tenth aspect. In the eleventh aspect, the control device (50) determines that the structure (40) is in the clogged state when a deceleration time of the transfer section (31) as the degree of deceleration is less than a predetermined value.

According to the eleventh aspect, it is determined that the structure (40) is in the clogged state when a deceleration time of the transfer section (31) is less than a predetermined value.

BRIEF DESCRIPTION OF THE DRAWINGS

FIG. 1 is an overall schematic diagram of an oil cooling system according to an embodiment.
FIG. 2 is a perspective view of a cooling apparatus.
FIG. 3 is a schematic configuration diagram illustrating an internal structure of the cooling apparatus.
FIG. 4 is a block diagram of the cooling apparatus.
FIG. 5 is a flowchart of control in determining a clogged state.

FIG. 6 is a graph showing the characteristics of the number of revolutions of a fan during a stopping period of the fan.

FIG. 7 is a graph showing the results of evaluating the relationship between the proportion of the number of revolutions of the fan to the maximum number of revolutions and the proportion of power to the sum of the power and the bearing loss.

FIG. 8 is a graph showing the characteristics of the number of revolutions of the fan of which the proportion of the power is large, during the stopping period of the fan.

FIG. 9 is a graph showing the characteristics of the number of revolutions of the fan of which the proportion of the power is small, during the stopping period of the fan.

FIG. 10 is a schematic configuration diagram illustrating an internal structure of a fluid transfer apparatus according to type A of a second variation.

FIG. 11 is a schematic configuration diagram illustrating an internal structure of a fluid transfer apparatus according to type B of the second variation.

FIG. 12 is a diagram for explaining a formula (2) according to a third variation.

DESCRIPTION OF EMBODIMENT

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding.

(1) Oil Cooling System

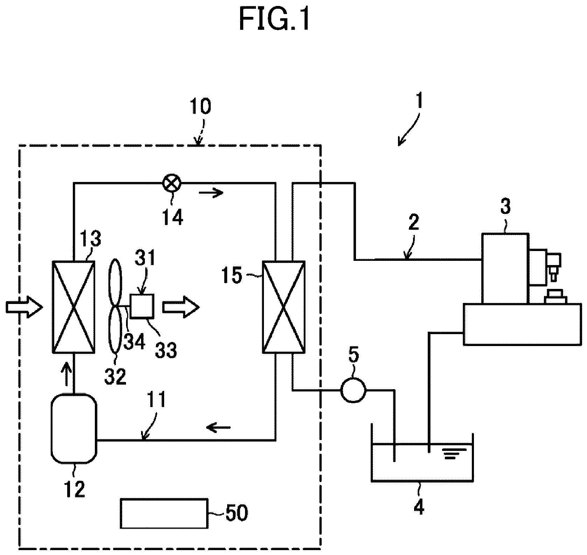

An oil cooling system (1) shown in FIG. 1 is a system for cooling oil for a machine tool (3). The oil cooling system (1) includes a cooling apparatus (10) and a circulation circuit (2). The cooling apparatus (10) cools the oil. The oil includes hydraulic oil, lubricant, and cooling oil for the machine tool (3). The machine tool (3) includes a machining sensor, a numerical control (NC) lathe, a grinding machine, a dedicated NC machine, and an NC electric discharge machine. The cooling apparatus (10) may cool oil for a machine of a different type from the machine tool (3), such as a molding machine or a press.

The circulation circuit (2) is connected to an oil tank (4), a pump (5), an evaporator (15), and the machine tool (3). The oil tank (4) stores oil. The pump (5) transfers the oil in the circulation circuit (2). The evaporator (15) is provided in the cooling apparatus (10) to cool the oil in the circulation circuit (2). The oil cooled in the evaporator (15) is supplied to the machine tool (3).

(2) Cooling Apparatus

The cooling apparatus (10) is an example of a fluid transfer apparatus of the present disclosure. As shown in FIG. 1, the cooling apparatus (10) includes a refrigerant circuit (11). The cooling apparatus (10) includes a casing (20), a fan (31), a filter (40), and a controller (50).

(2-1) Refrigerant Circuit

The refrigerant circuit (11) is filled with a refrigerant which circulates to perform a refrigeration cycle. The refrigerant circuit (11) includes a compressor (12), a condenser (13), an expansion valve (14), and the evaporator (15). The compressor (12), the condenser (13), the expansion valve (14), and the evaporator (15) are connected to the refrigerant circuit (11) in this order.

The compressor (12) compresses the refrigerant. The condenser (13) is an air heat exchanger that allows heat exchange between the air and the refrigerant. The condenser (13) is a fin-and-tube heat exchanger. The condenser (13) includes a plurality of plate-shaped fins arranged in the plate thickness direction, and a heat transfer tube passing through the fins. The condenser (13) has a path where air passes. The expansion valve (14) is configured as an electronic expansion valve, for example. The evaporator (15) exchanges heat between the refrigerant in the refrigerant circuit (11) and the oil in the circulation circuit (2). The evaporator (15) cools the oil in the circulation circuit (2) through the refrigerant in the refrigerant circuit (11). The refrigerant circuit (11) may include a four-way switching valve that performs switching between a regular cycle and a reverse cycle.

(2-2) Casing

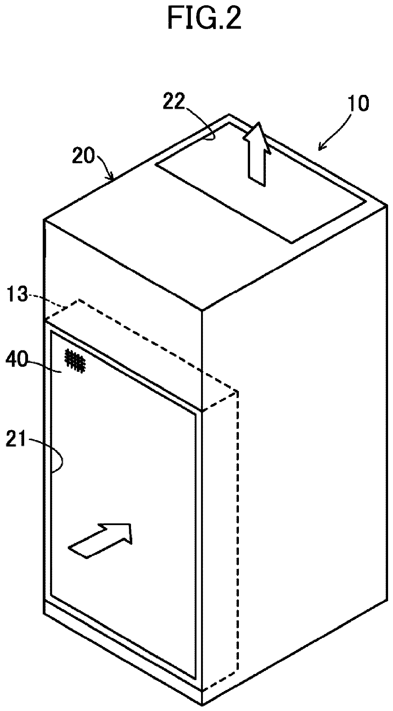

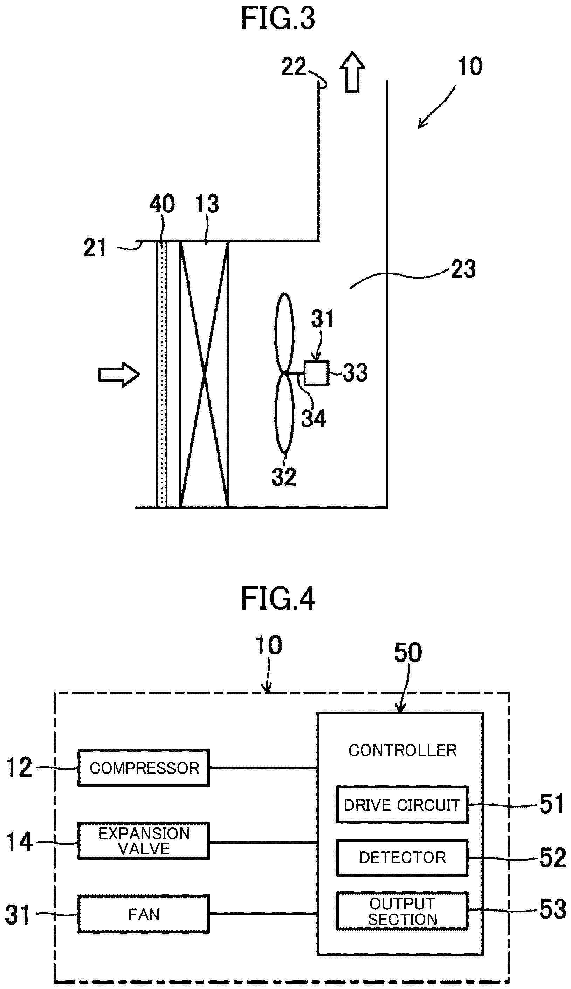

As illustrated in FIG. 2, the casing (20) has the shape of a hollow box. The casing (20) houses the compressor (12), the condenser (13), the expansion valve (14), the evaporator (15), the fan (31), and the filter (40). As illustrated in FIG. 2 and FIG. 3, the casing (20) has an inlet opening (21) and a blow-out opening (22). In this embodiment, the inlet opening (21) is formed in a side surface of the casing (20), and the blow-out opening (22) is formed in the upper surface of the casing (20). The inlet opening (21) is open laterally, and the blow-out opening (22) is open upward. In the casing (20), an air passage (23) is formed from the inlet opening (21) to the blow-out opening (22). The air passage (23) is an example of a fluid passage through which air as a fluid flows. The air passage (23) is substantially L-shaped as viewed in the vertical section.

In the air passage (23), the filter (40), the condenser (13), and the fan (31) are arranged in order from the upstream side to the downstream side of the air flow.

(2-3) Fan

The fan (31) is an example of a transfer section that transfers the fluid. The fan (31) transfers the air in the air passage (23). The fan (31) is configured as a propeller fan. The fan (31) includes an impeller (32) and a motor (33) for driving the impeller (32). The impeller (32) includes a plurality of blades and a hub to which these blades are fixed. The impeller (32) and the motor (33) are connected to each other through a drive shaft (34). The drive shaft (34) is rotatably supported by a bearing.

(2-4) Filter

The filter (40) catches an object in the fluid. The object includes particulate matter, such as oil mist and dust. The filter (40) is configured as, for example, a nonwoven fabric, and physically catches the object. The filter (40) extends over the entire area of the inlet opening (21) to cover the inlet opening (21). The filter (40) has a path where air passes. The filter (40) is an example of a structure that is a target for which it is determined whether it is in the clogged state or not. The condenser (13) described above is disposed behind the filter (40).

(2-5) Controller

As shown in FIG. 4, the cooling apparatus (10) includes the controller (50). The controller (50) includes a microcomputer mounted on a control board and a memory device (specifically, a semiconductor memory) that stores software for operating the microcomputer.

The controller (50) controls the refrigerant circuit (11). Specifically, the controller (50) controls the ON/OFF of the compressor (12) and the number of revolutions of the compressor (12). The controller (50) controls the ON/OFF of the fan (31) and the number of revolutions of the fan (31). The number of revolutions of the fan (31) corresponds to the number of revolutions of the motor (33).

The controller (50) includes a drive circuit (51) configured to drive the fan (31). The drive circuit (51) includes an inverter circuit which includes a plurality of switching elements and supplies a driving current to the motor (33).

The controller (50) receives signals from the motor (33). The signals include at least one of the current, the voltage, the electric power, the torque, the number of revolutions, the magnetic flux, or the induced voltage of the motor (33).

The cooling apparatus (10) includes a detector (52) configured to detect these signals from the motor (33). The detector (52) may be incorporated into the controller (50) or may be a separate element from the controller (50). The detector (52) of this embodiment detects the number of revolutions of the fan (31).

The controller (50) determines whether or not the filter (40) is in the clogged state, using the physical quantity (P) obtained from the motor (33). The physical quantity (P) is an index correlated with the pressure loss in the air passage (23).

The "clogged state" refers to a state in which an excessive amount of the object caught by the filter (40) impairs the normal function of the filter (40).

The physical quantity (P) of this embodiment is the degree of deceleration of the fan (31). The "degree of deceleration" as used herein is an index indicating the degree of deceleration of the fan (31) in a period from when the fan (31) in operation has no more driving force to when the fan (31) stops completely (hereinafter referred to also as a "stopping period"). The controller (50) uses the deceleration time ($\Delta T$) of the fan (31) as the degree of deceleration. The "deceleration time" is the time until the fan (31) at the first number of revolutions (R1) reaches the second number of revolutions (R2) in the stopping period. Details of the control for determining whether or not the filter (40) is in the clogged state will be described later.

The controller (50) includes an output section (53) configured to output first information indicating that the filter (40) is in the clogged state when the filter (40) is determined to be in the clogged state. In other words, the output section (53) is an annunciator configured to announce that the filter (40) is in the clogged state. The output section (53) outputs the first information to the outside of the cooling apparatus (10) through sound, light, display, communication, or a combination of any of them. Specific examples of the output section (53) include a speaker, a lamp, a display, a communication device, a combination of any of them, for example.

(3) Operation of Oil Cooling System

A basic operation of the oil cooling system (1) will be described. During operation of the oil cooling system (1), the controller (50) operates the compressor (12) and the fan (31) and adjusts the opening degree of the expansion valve (14). When the pump (5) is operated, the oil in the oil tank (4) is sent to the evaporator (15) and is cooled by the evaporator (15). The cooled oil is sent to the machine tool (3) and then returns to the oil tank (4).

In the refrigerant circuit (11), the refrigerant compressed by the compressor (12) flows through the condenser (13). In the condenser (13), the refrigerant dissipates heat to the air and is condensed. The condensed refrigerant is decompressed by the expansion valve (14) and then flows through the evaporator (15). In the evaporator (15), the refrigerant absorbs heat from the oil and evaporates. The evaporated refrigerant is sucked into the compressor (12).

When the fan (31) is operated, the air outside the casing (20) flows into the air passage (23) from the inlet opening (21). This air passes through the filter (40). The filter (40) catches oil mist and dust in the air. The air that has passed through the filter (40) flows through the condenser (13) and is heated. The air that has passed through the condenser (13) is expelled upward from the blow-out opening (22) to the outside of the casing (20).

(4) Determination of Filter in Clogged State

When the filter (40) is in the clogged state, replacement or maintenance of the filter (40) are needed. The cooling apparatus (10) of this example is applied in the oil cooling system (1). Thus, there may be a large amount of oil mist in the air to be sucked into the air passage (23). Accordingly, the filter (40) is easily clogged in the cooling apparatus (10). It is therefore particularly important to determine whether or not the filter (40) is in the clogged state in order to ensure the reliability of the oil cooling system (1).

On the other hand, it is conceivable that a pressure sensor or an airflow sensor are disposed in the air passage (23) to determine directly whether or not the filter (40) is in the clogged state. However, it is difficult to use these sensors since oil mist flows through the air passage (23). To address this, the controller (50) of this embodiment determines whether or not the filter (40) is in the clogged state by using the physical quantity (P) obtained from the motor (33).

(4-1) Determination Control

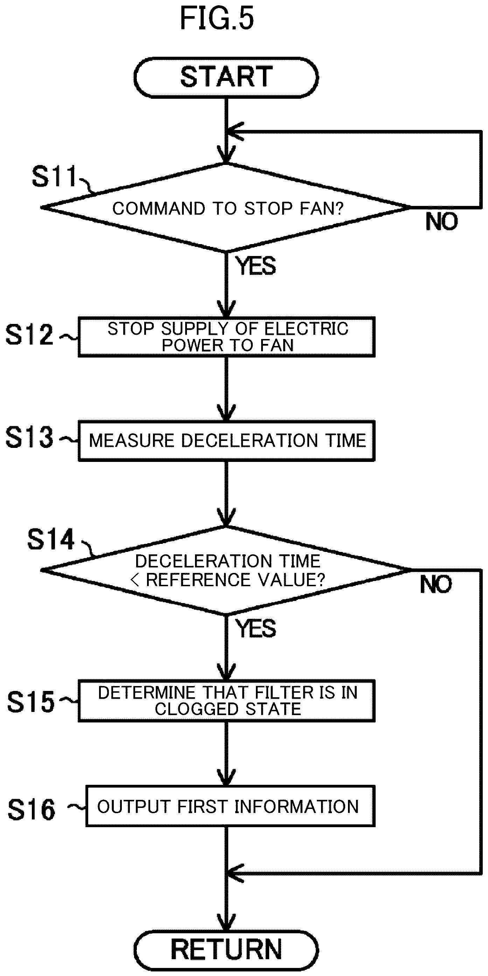

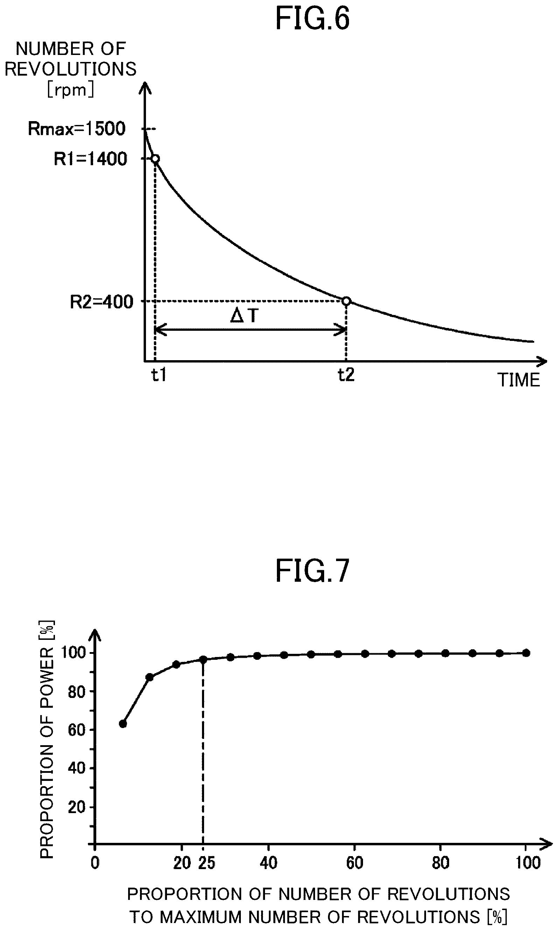

The control in determining whether or not the filter (40) is in the clogged state will be described with reference to FIG. 5 and FIG. 6.

In Step S11, when a command to stop the fan (31) is input to the controller (50), the process proceeds to Step S12. In Step S12, the controller (50) stops the supply of electric power to the fan (31). Specifically, the controller (50) stops the supply of the driving current from the drive circuit (51) to the motor (33).

Next, in Step S13, the controller (50) measures the deceleration time ($\Delta$T). Specifically, as shown in FIG. 6, the controller (50) determines the deceleration time ($\Delta$T) from a first point in time (t1) at which the number of revolutions of the fan (31) is the first number of revolutions (R1) to a second point in time (t2) at which the number of revolutions of the fan (31) reaches the second number of revolutions (R2).

In Step S14, the controller (50) compares the deceleration time ($\Delta$T) to a reference value. In Step S14, if the deceleration time ($\Delta$T) is less than the reference value, the process proceeds to Step S15. In Step S15, the controller (50) determines that the filter (40) is in the clogged state. In Step S16, the output section (53) outputs the first information to the outside of the cooling apparatus (10). Accordingly, a user, a maintenance agency, and a manufacturer, for example, can quickly grasp that the filter (40) is in the clogged state.

(4-2) Relationship Between Degree of Deceleration and Clogging of Filter

When the fan (31) has no more driving force, and the fan (31) enters into an idling state or a free-running state, the fan (31) keeps rotating due to inertia. Since load torque is generated in the fan (31) and the motor (33) at this moment, the number of revolutions of the fan (31) and the motor (33) decreases. The load torque T at this moment can be expressed by the following formula (1).

$$T = (Ps + Pv) \times Q/N \ldots (1)$$

Ps: Static Pressure [Pa]
Pv: Dynamic Pressure [Pa]
Q: Airflow Rate [$m^3$/sec]
N: Number of Revolutions of Fan [rpm]

The filter (40) in the clogged state increases the static pressure Ps and increases the pressure loss in the air passage (23). If the fan (31) to be used has the characteristics in the airflow rate and the static pressure according to which the load torque increases as the pressure loss in the air passage (23) increases, the degree of deceleration of the fan (31) increases as the load torque increases, which results in a reduction in the deceleration time ($\Delta$T). The fan having the characteristics is, for example, an axial fan, such as a propeller fan. Thus, as described above, it can be determined that the pressure loss in the air passage (23) has increased, and further that the filter (40) is in the clogged state, based on the deceleration time ($\Delta$T) of the axial fan (31) less than the reference value.

(4-3) First Number of Revolutions and Second Number of Revolutions

The maximum number of revolutions (Rmax) of the fan (31) of this embodiment is 1500 [rpm]. In this embodiment, the first number of revolutions (R1) is set to be 1400 [rpm], and the second number of revolutions (R2) is set to be 400 [rpm].

The first number of revolutions (R1) may be the maximum number of revolutions (Rmax). Setting the first number of revolutions (R1) to be relatively large makes the amount of change in the deceleration time ($\Delta$T) significant between the normal state and the clogged state, thereby making it possible to reduce false determinations as to whether the filter (40) is in the clogged state.

The second number of revolutions (R2) is preferably 25% or more of the maximum number of revolutions (Rmax) of the fan (31). The bearing loss is proportional to the number of revolutions of the fan (31), and the power is proportional to the cube of the number of revolutions of the fan (31). Thus, the proportion of the power to the sum of the bearing loss and the power sharply drops when the number of revolutions of the fan (31) decreases.

FIG. 7 is a graph showing an example of the proportion of the number of revolutions to the maximum number of revolutions (Rmax) of the fan (31) and the proportion of power to the sum of the bearing loss and the power. As can be seen from FIG. 7, the point at which the proportion of the power drops sharply is around 25% of the maximum number of revolutions (Rmax) of the fan (31). The proportion of the power to the sum of the bearing loss and the power decreases when the second number of revolutions (R2) is less than 25% of the maximum number of revolutions (Rmax), which increases the possibility of false determinations of the clogged state of the filter (40). Setting the second number of revolutions (R2) to be 25% or more of the maximum number of revolutions (Rmax) makes it possible to reduce lower accuracy in determining the clogged state. Details of the reason why a smaller proportion of the power lowers the accuracy in determining whether or not the filter (40) is in the clogged state will be described later.

(5-1) Influence of Bearing Loss

If the physical quantity (P) obtained from the motor (33) is used to determine whether or not the filter (40) is in the clogged state, the proportion of the disturbance to the physical quantity (P) increases due to the influence of the bearing loss of the fan (31), which lowers the accuracy in determining whether or not the filter (40) is in the clogged state. This will be described in detail.

The inventors of this application have found that if the proportion of the power to the sum of the power and the bearing loss of the fan (31) is small, the proportion of the disturbance to the physical quantity (P) increases, resulting in lower accuracy in determining the clogged state.

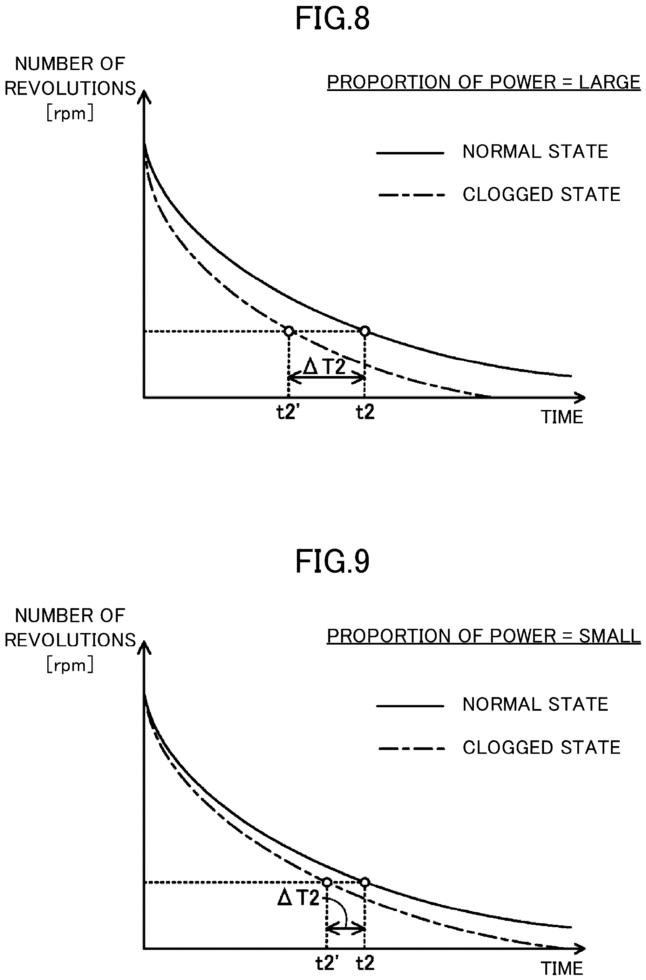

FIG. 8 is a graph showing the characteristics of the number of revolutions of the fan (31) having a configuration in which the proportion of the power to the sum of the power and the bearing loss is relatively large, during the stopping period of the fan (31). FIG. 9 is a graph showing the characteristics of the number of revolutions of the fan (31) having a configuration in which the proportion of the power to the sum of the power and the bearing loss is relatively small, during the stopping period of the fan (31). The solid curve in each of FIG. 8 and FIG. 9 shows the characteristics of the number of revolutions observed when the filter (40) is in the normal state. The dashed curve in each of FIG. 8 and FIG. 9 shows the characteristics of the number of revolutions observed when the filter (40) is in the clogged state. The "normal state" refers to a state in which the filter (40), which is the structure, is new and there is no loss of the function of the filter (40).

The power is an index that affects the pressure loss in the air passage (23). In contrast, the bearing loss of the fan (31) is a mechanical loss caused by the friction of the bearing on the drive shaft (34) of the fan (31), and can be said to be an index that does not affect the pressure loss in the air passage (23). Thus, as shown in FIG. 8, as for the fan (31) having a configuration in which the proportion of the power is large, the rate of change in the load torque including the bearing loss is relatively high when the state of the filter (40) changes from the normal state to the clogged state. Accordingly, in the fan (31) of FIG. 8, the difference is relatively large between the deceleration time ($\Delta T$) in the normal state of the filter (40) and the deceleration time ($\Delta T$) in the clogged state of the filter (40). As shown in FIG. 8, the difference ($\Delta T2$) between the second point in time (t2) in the normal state of the filter (40) and the second point in time (t2') in the clogged state of the filter (40) is also relatively large.

In contrast, as shown in FIG. 9, as for the fan (31) having a configuration in which the proportion of the power is small, the rate of change in the load torque including the bearing loss is relatively low even when the state of the filter (40) changes from the normal state to the clogged state. Accordingly, in the fan (31) of FIG. 9, the difference is relatively small between the deceleration time ($\Delta T$) in the normal state of the filter (40) and the deceleration time ($\Delta T$) in the clogged state of the filter (40). Specifically, in the fan (31) of FIG. 9, the difference ($\Delta T2$) between the second point in time (t2) in the normal state of the filter (40) and the second point in time (t2') in the clogged state of the filter (40) is also relatively small.

If the difference in deceleration time ($\Delta T$) between the normal state and the clogged state of the filter (40) is small as shown in FIG. 9, the filter (40) may be falsely determined to be in the clogged state. The physical quantity (P) obtained from the motor (33), i.e., the deceleration time ($\Delta T$), may vary due to another influence. Examples of the factors of the variations include the influence of deformation associated with the use of the fan (31), the influence of the air moving from the outside to the inside of the air passage (23), the influence of the density of the fluid flowing through the air passage (23), the influence of variations of individual differences of constituent components of the fan (31), and other factors. If an error of the deceleration time ($\Delta T$) obtained from the motor (33) occurs due to these influences, the deceleration time ($\Delta T$) becomes less than the reference value although the filter (40) is not in the clogged state, which results in a false determination of the clogged state.

(5-2) Configuration of Fan for Reducing False Determinations

In order to solve the above problem, the fan (31) of this embodiment is configured to make the proportion of the disturbance to the physical quantity (P) small. The disturbance as used herein is the influence of the bearing loss of the fan (31). That is, the fan (31) is configured to make the influence of the bearing loss on the physical quantity (P) small. Specifically, the fan (31) has a configuration whose characteristics are that the proportion of the power to the sum of the power and the bearing loss of the fan (31) is larger than a predetermined value. More specifically, the fan (31) is configured such that the proportion of the power to the sum of the power and the bearing loss of the fan (31) at the number of revolutions of 25% of the maximum number of revolutions of the fan (31) is larger than 90%. Specifically, the structure, components, shape, material, specifications, etc., of the fan (31) are determined to satisfy this relationship. For example, the use of a rolling bearing and a magnetic bearing can increase the proportion of the power to the sum of the power and the bearing loss of the fan (31).

As described above, whether or not the filter (40) is in the clogged state is determined in a region where the number of revolutions of the fan (31) is greater than 25% of the maximum number of revolutions (Rmax). Thus, if the proportion of the power is greater than 90% at the number of revolutions of 25% of the maximum number of revolutions (Rmax) of the fan (31), the proportion of the power is greater than 90% also in a region where the number of revolutions is higher than that number of revolutions. This is because the greater the number of revolutions of the fan (31), the larger the proportion of the power, as described above.

Here, the lower limit of the proportion of the power is set to be 90% because of the following reasons. The inventors of the present application examined changes in the power from when the filter is in the normal state to when the state of the filter changed to the clogged state, using a general fan. The power of a general unused fan is 30.6 [W] at the number of revolutions of 1400 [rpm]. On the other hand, the power increases to 31.0 [W] when the filter is in the clogged state. That is, the increment of the power is 0.4 [W] when the state of the filter changes from the normal state to the clogged state. In contrast, assuming that the rate of increase in the bearing loss associated with the use of the fan is 5%, the bearing loss of the unused fan needs to be about 8.5 [W] or less to satisfy the condition that the increment of the power be greater than the increment of the bearing loss. In other words, in order to satisfy this condition, the proportion of the power of the fan needs to be about 78% or more. If the proportion of the power is multiplied by a margin ratio (about 1.2), the lower limit of the proportion of the power is 90%.

According to this configuration of the fan (31), the proportion of the power is 90% or more in a period until the fan (31) at the first number of revolutions (R1) reaches the second number of revolutions (R2). As a result, it is possible to reduce the influence of the bearing loss on the deceleration time (ΔT), and therefore possible to improve the accuracy in determining whether or not the filter (40) is in the clogged state.

(5-3) Advantages of Embodiment

As described above, the present embodiment includes the controller (50) configured to determine whether or not the filter (40) is in the clogged state, using the deceleration time (ΔT) obtained from the motor (33) and correlated with the pressure loss in the air passage (23), and the fan (31) is configured to make the proportion of the disturbance to the deceleration time (ΔT) small. The disturbance as used herein is the influence of the bearing loss of the fan (31).

Accordingly, unlike the graph in FIG. 9, it is possible to reduce the chances that the difference in deceleration time (ΔT) between the normal state and the clogged state of the filter (40) becomes small, and it is therefore possible to reduce the chances of lower accuracy in determining whether or not the filter (40) is in the clogged state due to the small difference.

In particular, the fan (31) is configured such that the proportion of the power to the sum of the power and the bearing loss of the fan (31) at the number of revolutions of 25% of the maximum number of revolutions (Rmax) of the fan (31) is larger than 90%. According to this configuration, the proportion of the power can be greater in the region of the number of revolutions for which the deceleration time of the fan (31) is measured. It is thus possible to effectively reduce the chances of lower accuracy in determining whether or not the filter (40) is in the clogged state.

The controller (50) determines whether or not the filter (40) is in the clogged state, based on the number of revolutions of the motor (33) detected by the detector (52). Here, the number of revolutions of the motor (33) is also used to control the number of revolutions of the motor (33). That is, the detector (52) is used for both the control of the number of revolutions of the motor (33) and determination as to whether the filter (40) is in the clogged state. It is therefore possible to reduce the number of detector(s).

(6) Variations

The above-described embodiment may be configured as indicated in the following variations. Configurations of the variations to be described below may be added to the foregoing embodiment, or may be used with the configuration of the embodiment partially changed.

(6-1) First Variation: Configuration for Reducing Influence of Deformation Associated With Use of Impeller

The influence of deformation associated with the use of an impeller (32) appears as a disturbance to the physical quantity obtained from a motor (33). If the physical quantity changes due to the influence of the disturbance, the accuracy in determining whether or not a filter (40) is in the clogged state is lowered. To address this, a fan (31) of the first variation is configured to make the influence of the deformation associated with the use of the impeller (32) on the physical quantity (P) small. The impeller (32) of the fan (31) is made of resin, but is configured to be less deformed over time. The impeller (32) may be made of a metal material that is less likely to deform over time.

The time at which the first-time operation of the fan (31) starts is referred to as a point in time ta. The time at which the fan (31) has been operated at the maximum operating temperature of the motor (33) or the impeller (32) and the maximum number of revolutions for 600 hours since the point in time ta is referred to as a point in time tb. The fan (31) is configured such that the amount of change in the physical quantity (P) caused by the deformation of the impeller (32) from the point in time ta to the point in time tb is 50% or less of the required accuracy. The "required accuracy" as used herein corresponds to a change in the physical quantity corresponding to an estimated error of the pressure loss in a fluid passage (23). The structure, components, shape, material, specifications, etc., of the fan (31) are determined to satisfy this relationship. For example, this relationship can be satisfied by using creep-resistant polyether ether ketone (PEEK) as the material of the fan.

For example, if the tolerance of the estimated value of the pressure loss required for a product is 10 pa ($\pm$5 pa), a change in the deceleration time ($\Delta T$) corresponding to the tolerance (i.e., the required accuracy) is, for example, 63.5 [msec]. **In** this case, the fan (31) is configured such that the change in the deceleration time ($\Delta T$) caused by the deformation of the impeller (32) from the point in time ta to the point in time tb is 50% or less of 63.5 [msec]. Thus, the disturbance to the deceleration time ($\Delta T$), caused by the deformation of the impeller (32), can be reduced to the tolerance or less. It is thus possible to reduce the chances of lower accuracy in determining whether or not the filter (40) is in the clogged state.

The 600 hours mentioned above are the time (effective value) at which the deformation associated with the use of a general fan (31) at the maximum operating temperature and the maximum number of revolutions converges, and the time obtained empirically.

(6-2) Second Variation: Configuration for Reducing Influence of Movement of Fluid From Outside To Inside of Fluid Passage

The movement of a fluid from the outside to the inside of an air passage (23) causes a disturbance to the physical quantity obtained from a motor (33). An increase of this influence lowers the accuracy in determining whether or not a filter (40) is in the clogged state. To address this, the air passage (23) of the second variation is configured to make the influence of the movement of the fluid from the outside to the inside of the air passage (23) small.

(6-2-1) Type A of Second Variation

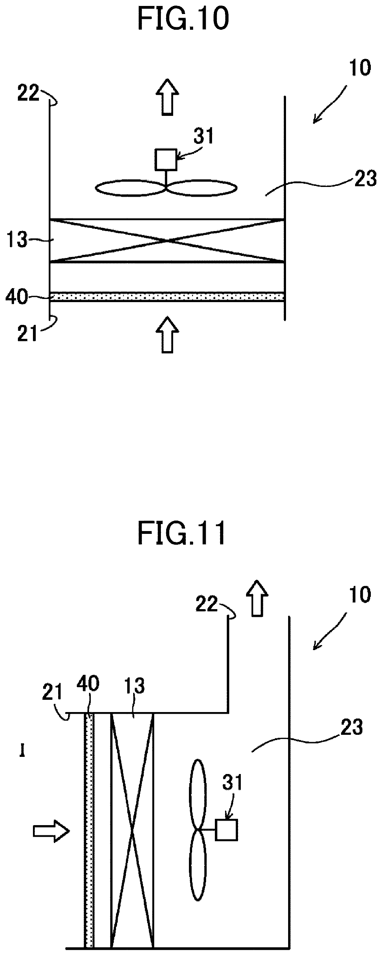

Specifically, in type A of the second variation, as illustrated in FIG. 10, an inlet opening (21) of an air passage (23) is open downward, and a blow-out opening (22) is open upward. This configuration can reduce the movement of the air from the outside to the inside of the air passage (23) due to the influence of side winds. It is thus possible to reduce the chances of greater proportion of the disturbance to the physical quantity (P) due to the influence of side winds, thereby making it possible to reduce false determinations as to whether a filter (40) is in the clogged state.

As in the foregoing embodiment, the blow-out opening (22) may be open upward, and the inlet opening (21) may be open laterally. That is, the inlet opening (21) and the blow-out opening (22) may have any configuration as long as at least one of the inlet opening (21) or the blow-out opening (22) is open upward or downward.

(6-2-2) Type B of Second Variation

Specifically, in type B of the second variation, a cooling apparatus (10) is installed in an indoor space (I), as illustrated in FIG. 11. An inlet opening (21) and a blow-out opening (22) of an air passage (23) are open toward the indoor space (I). This configuration can reduce the movement of the air from the outside to the inside of the air passage (23) due to the influence of side winds outside the room. It is thus possible to reduce the chances of greater proportion of the disturbance to the physical quantity (P) due to the influence of side winds outside the room, thereby making it possible to reduce false determinations as to whether a filter (40) is in the clogged state.

One of the inlet opening (21) or the blow-out opening (22) may be open to the indoor space (I), and the other may be open to the outdoor space.

(6-3) Third Variation: Relationship of Physical Quantity Between Normal State And Clogged State

A cooling apparatus (10) of the third variation is configured to satisfy the following formula (2).

$$X > (Y + Y')/2 \ldots (2)$$

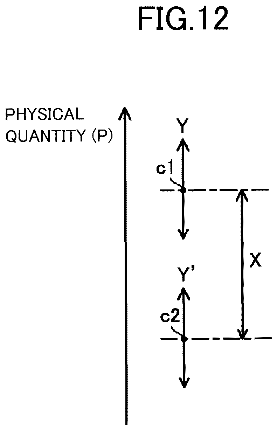

Here, Y is the physical quantity (P) obtained from the motor (33) when the filter (40) is in the normal state. Y' is the physical quantity (P) obtained from the motor (33) when the filter (40) is in the clogged state. The physical quantity (P) is, for example, the deceleration time ($\Delta T$). Y and Y' may vary due to various factors as described above. Examples of the factors of the variations include the influence of the bearing loss, the influence of deformation associated with the use of the fan (31), the influence of the air moving from the outside to the inside of the air passage (23), the influence of the density of the fluid flowing through the air passage (23), the influence of variations of individual differences of constituent components of the fan (31), and other factors, as described above. Thus, as illustrated in FIG. 12, Y and Y' each have a predetermined range. X is the difference between the median value (c1) of the range of Y and the median value (c2) of the range of Y'.

One or both of the fan (31) and the air passage (23) are configured to satisfy the above formula (2). Specifically, the structure, shape, material, specifications, etc., of one or both of the fan (31) and the air passage (23) are determined based on the evaluation of the above-described multiple influences.

Examples of the index related to the density of the fluid flowing through the air passage (23) include the temperature, humidity, pressure, level of pollution of the fluid, for example. These indexes can be used to evaluate the influence of the density of the fluid. Variations of the individual differences of components are evaluated using a plurality of samples of the components and their actual values.

If Y and Y' shown in FIG. 12 overlap each other, it may be possible that the filter (40) is falsely determined to be in the clogged state in the above-described determination of the clogged state even through the filter (40) is in the normal state. In this regard, Y and Y' do not overlap each other if the above formula (2) is satisfied. It is therefore possible to reduce the chances of lower accuracy in determining the clogged state due to the various factors described above.

(6-4) Fourth Variation: Correction of Physical Quantity

A controller (50) of the fourth variation corrects the physical quantity (P) obtained from the motor (33), using another physical quantity, and then determines whether or not a structure (40) is in the clogged state using the corrected physical quantity as a judgement value.

(6-4-1) Type A of Fourth Variation: Correction based on Amount of Deformation Associated With Use of Fan

The physical quantity (P) obtained from a motor (33) changes as described above when the deformation of the fan (31) associated with the use of the fan (31) occurs. Thus, the controller (50) corrects the physical quantity (P), using the amount of deformation of the fan (31).

A greater amount of deformation of the fan (31) results in an increase in the deceleration time (ΔT) obtained from the motor (33). Accordingly, it may be possible that the above relationship in Step S14 is not satisfied and that the filter (40) in the clogged state is not determined to be in the clogged state. The controller (50) of type A of the fourth variation makes corrections so that the greater the amount of deformation of the fan (31), the shorter the deceleration time (ΔT). It is therefore possible to reduce the chances of lower accuracy in determining the clogged state due to the deformation associated with the use of the fan (31). The amount of deformation of the fan (31) is estimated by the controller (50) based on the operating time of the fan (31), the number of revolutions of the fan (31), the temperature of the fan (31), and the specifications of the fan (31). Alternatively, the amount of deformation of the fan (31) is measured directly by a sensor.

(6-4-2) Type B of Fourth Variation: Correction Based On Density of Fluid

The physical quantity (P) obtained from a motor (33) changes when the density of a fluid in an air passage (23) changes. To address this, a controller (50) corrects the physical quantity (P), using an index related to the density of the fluid. Examples of this index include the temperature, humidity, pressure, level of pollution of the fluid, for example. These indexes are measured directly by a sensor disposed in the air passage (23). Alternatively, these indexes are determined by constants determined according to a physical property value of the fluid, or by the elevation at which the cooling apparatus (10) is used. It is therefore possible to reduce the chances of lower accuracy in determining the clogged state due to changes in the density of the fluid of the air passage (23).

(6-5) Fifth Variation: Configuration for Increasing Amount of Change in Physical Quantity

A fan (31) of the fifth variation is configured to make the proportion of a disturbance to the physical quantity (P) small by increasing the amount of change (ΔP) in the physical quantity (P) associated with a change in the pressure loss in an air passage (23) between the normal state and the clogged state of a filter (40). Specifically, the fan (31) is configured to have lower inertia (the moment of inertia) to increase the amount of change (ΔP). An impeller (32) of the fifth variation is made of a material having a lower density than a metal material, for example. Specifically, the impeller (32) is made of a resin material, such as polypropylene.

During the stopping period of the fan (31), the equation of motion expressed by the following formula (3) holds true.

$$J \times \alpha = T \ldots (3)$$

T: Load Torque
α: Angular Acceleration
J: Inertia

Here, a corresponds to the rate of deceleration of the fan (31) during the stopping period of the fan (31). If the load torque of the fan (31) increases due to the clogging of the filter (40), the smaller the inertia, the greater the rate of deceleration (angular acceleration α) of the fan (31). Thus, assuming that the physical quantity (P) correlated with the pressure loss is the rate of deceleration (angular acceleration $\alpha$) of the fan (31), a reduction in the inertia of the fan (31) causes an increase in the rate of deceleration of the fan (31), resulting in a greater change in the physical quantity (P) correlated with the pressure loss. That is, the fifth variation has a configuration that makes changes in the physical quantity (P) in the clogged state more significant.

(7) Other Embodiments

The above-described embodiment and variations may also be configured as follows.

(7-1) Transfer Section

The transfer section transfers a fluid by a rotational motion. The transfer section may not only be a fan (31) that transfers a gas, such as air, but also be a pump that transfers a liquid, such as water. In this case, a fluid passage forms a passage through which a liquid flows.

(7-2) Structure

A structure is disposed in the fluid passage, and a pressure loss occurs in the fluid passage due to the air passing through the structure. The structure may be other than the filter (40) as long as it has such a configuration. Specifically, the structure may be a heat exchanger, such as a condenser, an evaporator, and a radiator. The structure may be a demister or an electrostatic precipitator.

(7-3) Physical Quantity

The physical quantity (P) is an index correlated with the pressure loss in the fluid passage (23) and obtained from the motor (33). The physical quantity (P) may be an index other than the deceleration time ($\Delta T$). The index related to the degree of deceleration may be the deceleration speed of the fan (31) during the stopping period of the fan (31). Examples of the physical quantity (P) other than the degree of deceleration include the current, voltage, or electric power, torque, number of revolutions, magnetic flux, induced voltage, sound, and vibrations of the motor (33). The physical quantity (P) may be a frequency spectrum of the current, voltage, electric power, or torque of the motor (33), for example.
In determining the clogged state using these physical quantities (P), the accuracy of determination is easily lowered due to the influence of the bearing loss, as described above. Thus, reducing the influence of the bearing loss can improve the accuracy of determination as described in the above embodiment. The configuration of the above-described embodiment is effective particularly in the case in which the physical quantity (P) correlated with the electric power of the motor (33) is used, such as the effective values of the electric power or current of the motor (33) and the above-described deceleration time ($\Delta T$).

In the case of using the electric power of the motor (33) as the physical quantity (P), the number of revolutions of the motor (33) in the normal state of the structure (40) and the electric power value (reference electric power value) of the motor (33) corresponding to this number of revolutions are stored in a storage unit of the controller (50). The controller (50) determines that the structure (40) is in the clogged state when the actual electric power value of the motor (33) rotating at a predetermined number of revolutions is greater than the reference electric power value corresponding to this number of revolutions by a predetermined value (e.g., 5% or more of the reference electric power value).

(7-4) Determination of Deceleration Time

Depending on the characteristics of the fan (31), the controller (50) may determine that the structure (40) is in the clogged state when the deceleration time ($\Delta T$) is greater than a reference value. Specifically, similarly to a sirocco fan, a fan (31) may sometimes have a characteristic in which an increase in the static pressure of the fluid passage (23) leads to a lower degree of deceleration of the fan (31). In this case, the deceleration time ($\Delta T$) increases due to clogging of the structure (40). To address this, the controller (50) determines that the structure (40) is in the clogged state when the deceleration time ($\Delta T$) is greater than the reference value.

(7-5) Other Examples of Use of Fluid Transfer Apparatus

The fluid transfer apparatus may be applied in an air treatment apparatus. The air treatment apparatus as used herein is an apparatus having an air passage (23) through which air flows, and includes an air conditioner, an air cleaner, a humidity control apparatus, a ventilator, and a hot water supply apparatus. The air conditioner as used herein includes an apparatus for cooling the inside of a refrigerator, a freezer, or any other container. The air passage may be a passage in an outdoor unit of an air conditioner or a hot water supply apparatus. The fluid transfer apparatus may be applied in an apparatus having a flow path through which a liquid flows, such as a hydroelectric generator.

(7-6) Determination of Clogged State

The controller (50) compares the physical quantity obtained from the motor (33) to a predetermined reference value to determine whether or not the filter (40) is in the clogged state. However, the controller (50) may determine the degree of clogging of the filter (40) (the stage of progress of clogging), based on the physical quantity obtained from the motor (33).
While the embodiment, the variations, and other embodiments have been described above, it will be understood that various changes in form and details may be made without departing from the spirit and scope of the claims. The elements according to the embodiment, the variations thereof, and the other embodiments may be combined and replaced with each other.

The expressions of "first," "second," "third," . . . described above are used to distinguish the words to which these expressions are given, and the number and order of the words are not limited.

INDUSTRIAL APPLICABILITY

As can be seen from the foregoing description, the present disclosure is useful for a fluid transfer apparatus.

DESCRIPTION OF REFERENCE CHARACTERS

10  Cooling Apparatus (Fluid Transfer Apparatus)
21  Inlet Opening
22  Blow-Out Opening
23  Air Passage (Fluid Passage)
31  Fan (Transfer Section)
32  Impeller
33  Motor
40  Filter (Structure)
I   Indoor Space

**Claims**

1.  A fluid transfer apparatus comprising:

    a fluid passage (23);
    a transfer section (31) including a motor (33) and an impeller (32) driven by the motor (33), the transfer section (31) being configured to transfer a fluid in the fluid passage (23);
    a structure (40) disposed in the fluid passage (23); and
    a control device (50) configured to determine whether or not the structure (40) is in a clogged state, using a physical quantity obtained from the motor (33) and correlated with a pressure loss in the fluid passage (23),
    at least one of the transfer section (31) or the fluid passage (23) being configured to make a proportion of a disturbance to the physical quantity small.

2.  The apparatus of claim 1, wherein
    the disturbance includes an influence of a bearing loss of the transfer section (31).

3.  The apparatus of claim 2, wherein
    a proportion of power of the transfer section (31) to a sum of the power and the bearing loss of the transfer section (31) at a number of revolutions of 25% of a maximum number of revolutions of the transfer section (31) is larger than 90%.

4.  The apparatus of claim 1, wherein
    the disturbance includes an influence of deformation of the impeller (32) associated with use of the transfer section (31).

5.  The apparatus of claim 4, wherein
    the impeller (32) is made of resin.

6.  The apparatus of claim 4 or 5, wherein

    a time at which a first-time operation of the transfer section (31) starts is referred to as a point in time ta, and a time at which the transfer section (31) has been operated at a maximum operating temperature of the motor (33) or the impeller (32) and a maximum number of revolutions for 600 hours since the point in time ta is referred to as a point in time tb, and
    the transfer section (31) is configured such that an amount of change in the physical quantity caused by the deformation of the impeller (32) from the point in time ta to the point in time tb is 50% or less of required accuracy.

7.  The apparatus of claim 1, wherein
    the disturbance includes an influence of movement of the fluid from outside to inside of the fluid passage (23).

8.  The apparatus of claim 7, wherein
    at least one of an inlet opening (21) or a blow-out opening (22) of the fluid passage (23) is open upward or downward.

9.  The apparatus of claim 7 or 8, wherein
    at least one of an inlet opening (21) or a blow-out opening (22) of the fluid passage (23) is open toward an indoor space (I).

10. The apparatus of any one of claims 1 to 9, wherein
    the physical quantity is a degree of deceleration of the transfer section (31) when the transfer section (31) is coming to a stop.

11. The apparatus of claim 10, wherein
    the control device (50) determines that the structure (40) is in the clogged state when a deceleration time of the transfer section (31) as the degree of deceleration is less than a predetermined value.

EP 4 537 924 A1

## FIG.1

# FIG.2

# FIG.3

# FIG.4

# FIG.5

START

S11 — COMMAND TO STOP FAN? — NO

YES

S12 — STOP SUPPLY OF ELECTRIC POWER TO FAN

S13 — MEASURE DECELERATION TIME

S14 — DECELERATION TIME < REFERENCE VALUE? — NO

YES

S15 — DETERMINE THAT FILTER IS IN CLOGGED STATE

S16 — OUTPUT FIRST INFORMATION

RETURN

# FIG.6

# FIG.7

PROPORTION OF NUMBER OF REVOLUTIONS
TO MAXIMUM NUMBER OF REVOLUTIONS [%]

# FIG.8

NUMBER OF
REVOLUTIONS
[rpm]

PROPORTION OF POWER = LARGE

——— NORMAL STATE

— - — - — CLOGGED STATE

ΔT2

t2'　t2

TIME

# FIG.9

NUMBER OF
REVOLUTIONS
[rpm]

PROPORTION OF POWER = SMALL

——— NORMAL STATE

— - — - — CLOGGED STATE

ΔT2

t2'　t2

TIME

18

## FIG.10

## FIG.11

# FIG.12

PHYSICAL
QUANTITY (P)

Y

c1

Y'

c2

X

## INTERNATIONAL SEARCH REPORT

| International application No. |
|---|
| **PCT/JP2023/031943** |

**A. CLASSIFICATION OF SUBJECT MATTER**

***B01D 46/42***(2006.01)i; ***B23Q 11/10***(2006.01)i
FI: B01D46/42 A; B23Q11/10 E

According to International Patent Classification (IPC) or to both national classification and IPC

**B. FIELDS SEARCHED**

Minimum documentation searched (classification system followed by classification symbols)

B23Q11/10; B01D46/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 10-309422 A (MATSUSHITA SEIKO CO LTD) 24 November 1998 (1998-11-24) claims, paragraphs [0023], [0031], [0048], [0050], example 5, fig. 2 | 1-2, 4-5, 7-11 |
| A | claims, paragraphs [0023], [0031], [0048], [0050], example 5, fig. 2 | 3, 6 |
| Y | JP 2020-112034 A (PANASONIC IP MAN CORP) 27 July 2020 (2020-07-27) paragraphs [0007], [0010], [0028] | 1-2, 4-5, 7-11 |
| A | paragraphs [0007], [0010], [0028] | 3, 6 |
| Y | JP 2021-125984 A (HITACHI JOHNSON CONTROLS AIR CONDITIONING INC) 30 August 2021 (2021-08-30) paragraphs [0003], [0010] | 1-2, 4-5, 7-11 |
| A | paragraphs [0003], [0010] | 3, 6 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/031943**

| Patent document cited in search report | | | Publication date (day/month/year) | Patent family member(s) | Publication date (day/month/year) |
|---|---|---|---|---|---|
| JP | 10-309422 | A | 24 November 1998 | (Family: none) | |
| JP | 2020-112034 | A | 27 July 2020 | (Family: none) | |
| JP | 2021-125984 | A | 30 August 2021 | (Family: none) | |

Form PCT/ISA/210 (patent family annex) (January 2015)

**EP 4 537 924 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002102596 A